(19) Europäisches Patentamt
European Patent Office
Office européen des brevets

(11) **EP 3 138 221 B1**

(12) **EUROPÄISCHE PATENTSCHRIFT**

(45) Veröffentlichungstag und Bekanntmachung des Hinweises auf die Patenterteilung:
**02.03.2022   Patentblatt 2022/09**

(21) Anmeldenummer: **15741926.8**

(22) Anmeldetag: **07.04.2015**

(51) Internationale Patentklassifikation (IPC):
*H04B 17/10* (2015.01)      *H04B 17/309* (2015.01)
*H04L 1/20* (2006.01)       *H04L 25/06* (2006.01)
*H04L 1/00* (2006.01)

(52) Gemeinsame Patentklassifikation (CPC):
**H04B 17/101; H04B 17/309; H04L 1/0002;**
**H04L 25/067;** H04B 17/102; H04B 17/103;
H04L 1/20; H04W 4/70

(86) Internationale Anmeldenummer:
**PCT/EP2015/057459**

(87) Internationale Veröffentlichungsnummer:
**WO 2015/165692 (05.11.2015 Gazette 2015/44)**

(54) **SCHÄTZEN EINER ÜBERTRAGUNGSRATE FÜR DATENPAKETE**

ESTIMATING A DATA PACKET TRANSMISSION RATE

ÉVALUATION D'UN DÉBIT DE TRANSMISSION DE PAQUETS DE DONNÉES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **29.04.2014   DE 102014208084**

(43) Veröffentlichungstag der Anmeldung:
**08.03.2017   Patentblatt 2017/10**

(73) Patentinhaber: **Volkswagen Aktiengesellschaft**
**38440 Wolfsburg (DE)**

(72) Erfinder: **SIMSEK, Burak**
**38112 Braunschweig (DE)**

(56) Entgegenhaltungen:
**EP-A1- 1 821 435      EP-A2- 1 069 721**
**EP-A2- 1 521 384      WO-A2-2006/055646**

**Beschreibung**

Die vorliegende Erfindung betrifft ein Verfahren und eine Vorrichtung, um

Übertragungsrate zu bestimmen, mit welcher Datenpakete von dem Fahrzeug drahtlos zu dem Empfänger gesendet werden.

Die DE 10 2010 056 158 A1 beschreibt ein Verfahren zum Einstellen eines Empfangsparameters einer Empfangsvorrichtung in einem Fahrzeug, welche zum Empfang von Datenpaketen ausgestaltet ist. Die Bestimmung einer Übertragungsrate über eine rückgekoppelte Datenpaketqualität wird in der Patentanmeldung EP 1 069 721 A2 offenbart.

In Zukunft sollen zahlreiche Informationen zwischen Fahrzeugen oder zwischen einem Fahrzeug und einer Infrastruktur ausgetauscht werden, was auch als Car2Car- oder Car2X-Kommunikation bekannt ist. Dabei sendet jedes Fahrzeug Informationen in Form von Datenpaketen aus, ohne eine Rückmeldung zu erhalten, ob die Informationen bzw. die Datenpakete vom Empfänger korrekt empfangen werden. Um unter diesen Voraussetzungen die Informationen möglichst sicher dem Empfänger zuzustellen, arbeitet gemäß einem Ansatz nach dem Stand der Technik jedes Fahrzeug mit einer maximalen Übertragungsrate, welche gemäß dem entsprechenden Standard definiert ist. Dabei wird unter der Übertragungsrate eine Art Wiederholungsrate verstanden, mit welcher die zu übertragenden Informationen periodisch wiederholt gesendet werden. Das Arbeiten mit der maximalen Übertragungsrate erhöht allerdings nachteiligerweise die Wahrscheinlichkeit von Datenpaketkollisionen und verstopft quasi die Datenkanäle, was wiederum die Wahrscheinlichkeit einer erfolgreichen Informationsübermittlung senkt.

Daher stellt sich die vorliegende Erfindung die Aufgabe, die Übertragungsrate, mit welcher Informationen von einem Fahrzeug zu einem Empfänger gesendet werden, abhängig von einer Empfangswahrscheinlichkeit, mit welcher die Informationen beim Empfänger empfangen werden, derart einzustellen, dass die Wahrscheinlichkeit einer erfolgreichen Informationsübermittlung möglichst hoch ist oder einem vorgegebenen Schwellenwert einhält.

Erfindungsgemäß wird diese Aufgabe durch ein Verfahren zur Bestimmung einer Übertragungsrate nach Anspruch 1 und durch eine Vorrichtung nach Anspruch 4 gelöst. Die abhängigen Ansprüche definieren bevorzugte und vorteilhafte Ausführungsformen der vorliegenden Erfindung.

Im Rahmen der vorliegenden Erfindung wird ein Verfahren zum Schätzen einer Empfangswahrscheinlichkeit eines Datenpakets bereitgestellt, welches drahtlos bzw. per Funk von einem Sender, welcher ein Verkehrsinfrastrukturobjekt (z.B. eine so genannte Road Site Unit) oder ein Fahrzeug ist, zu einem Empfänger (beispielsweise einem anderen Fahrzeug oder einem anderen Verkehrsinfrastrukturobjekt) übertragen wird. Dabei umfasst das Verfahren folgende Schritte:

- Schätzen einer Signalqualität des von dem Empfänger empfangenen Datenpakets.
- Schätzen der Empfangswahrscheinlichkeit des von dem Empfänger empfangenen Datenpakets abhängig von der geschätzten Signalqualität.

Bei dem Verkehrsinfrastrukturobjekt kann es sich bei dieser Erfindung um ein stationäres Verkehrsinfrastrukturobjekt, beispielsweise eine Ampelanlage oder ein feststehendes Verkehrsschild, oder um ein mobiles Verkehrsinfrastrukturobjekt, beispielsweise einen Anhänger eines Baustellenfahrzeugs, handeln.

Das Schätzen der Signalqualität des oder der von dem Empfänger empfangenen Datenpakete erfolgt dabei vorteilhafterweise ohne eine Rückmeldung von dem Empfänger, wodurch eine zusätzliche Datenübertragungslast (durch die Rückmeldungen) entfällt. Durch das Schätzen der Empfangswahrscheinlichkeit kann dann vorteilhafterweise die Übertragungsrate derart angepasst werden, dass die Wahrscheinlichkeit einer erfolgreichen Informationsübermittlung einen vorgegebenen Schwellenwert erreicht oder übertrifft.

Insbesondere umfasst das Verfahren folgende weitere Schritte:

- Empfangen eines Datenpakets in dem Fahrzeug oder Verkehrsinfrastrukturobjekt selbst, um insbesondere die Signalqualität dieses Datenpakets zu bestimmen.
- Anpassen der geschätzten Signalqualität abhängig von dem von dem Fahrzeug oder Verkehrsinfrastrukturobjekt selbst empfangenen Datenpaket, insbesondere abhängig von der dabei gemessenen Signalqualität.

Unter der Voraussetzung, dass von dem Empfänger keine Informationen bezüglich der Signalqualität der von dem Empfänger empfangenen Datenpakete gesendet werden, wird gemäß dieser Ausführungsform die Signalqualität der Datenpakete bestimmt, welche in dem Fahrzeug oder dem Verkehrsinfrastrukturobjekt selbst empfangen werden. Abhängig von dieser Signalqualität wird dann die für den Empfänger geschätzte Signalqualität angepasst und ausgehend von dieser angepassten Signalqualität die Empfangswahrscheinlichkeit für die von dem Empfänger empfangenen Datenpakete geschätzt. Mit anderen Worten wird gemäß dieser Ausführungsform quasi vorausgesetzt, dass die Signalqualität (und damit die Empfangswahrscheinlichkeit) der von dem Empfänger empfangenen Datenpakete der Signalqualität (und damit der Empfangswahrscheinlichkeit) der von dem Sender (d.h. in dem Fahrzeug oder dem Verkehrsinfrastrukturobjekt) empfangenen Datenpakete entspricht oder sich die Signalqualitäten zumindest ähnlich verhalten.

Die Signalqualität wird dabei abhängig von einem oder von mehreren Parametern oder Faktoren bestimmt, welche aus der folgenden Gruppe ausgewählt werden können:

- Ein Antennengewinn mindestens einer Antenne des Fahrzeugs oder Verkehrsinfrastrukturobjekts. Dabei kann zwischen dem Antennengewinn beim Senden von Datenpaketen und dem Antennengewinn beim Empfangen von Datenpaketen unterschieden werden. Wenn das Fahrzeug bzw. Verkehrsinfrastrukturobjekt zum Senden der Datenpakete eine andere Antenne einsetzt, als zum Empfangen der Datenpakete, kann die Signalqualität abhängig von dem Antennengewinn der Sendeantenne und/oder von dem Antennengewinn der Empfangsantenne bestimmt werden. Der Antennengewinn kann in diesem Fall der Summe des Antennengewinns der Sendeantenne und des Antennengewinns der Empfangsantenne entsprechen. Dabei gilt im Allgemeinen: je höher der Antennengewinn, desto besser die Signalqualität.
- Eine Sendeleistung der Sendeantenne des Fahrzeugs bzw. Verkehrsinfrastrukturobjekts. Je höher die Sendeleistung eingestellt wird, desto höher sollte die Signalqualität ausfallen.

- Ein Abstand zwischen dem Fahrzeug bzw. Verkehrsinfrastrukturobjekt und dem Empfänger. Je geringer der Abstand ist, desto höher bzw. besser fällt im Allgemeinen die Signalqualität aus.
- Ein Koeffizient oder Faktor, mit welchem von dem Abstand zwischen dem Sender und dem Empfänger abhängige Effekte, welche die Signalqualität verändern, berücksichtigt werden.
- Eine Dämpfung der Signalleistung des Datenpakets aufgrund von Umgebungsfaktoren, welche abhängig von der aktuellen Umgebung des Fahrzeugs bzw. Verkehrsinfrastrukturobjekts sind. Je höher diese Dämpfung ausfällt, desto geringer ist die Signalqualität.
- Ein mittlerer Übertragungsfehler, welcher von der aktuellen Umgebung des Fahrzeugs bzw. Verkehrsinfrastrukturobjekts abhängt. Dabei wird unter dem mittleren Übertragungsfehler ein Mittelwert des Übertragungsfehlers über der Zeit verstanden. Je höher dieser mittleren Übertragungsfehler ausfällt, desto geringer ist die Signalqualität.
- Ein individueller Übertragungsfehler, welcher nur für die Übertragung von Datenpaketen zwischen dem Sender und einem bestimmten Empfänger gilt. Mit anderen Worten existiert für jeden Empfänger des Fahrzeugs bzw. Verkehrsinfrastrukturobjekts jeweils ein individueller Übertragungsfehler. Durch den individuellen Übertragungsfehler wird die Tatsache berücksichtigt, dass der Antennengewinn des Empfängers und die Effekte der Fahrzeugkarosserie und der zu Grunde liegenden Fahrzeugarchitektur des empfangenen Fahrzeugs nicht bekannt sind. Der individuelle Übertragungsfehler wird insbesondere dann eingesetzt, wenn vorher ein von dem Empfänger gesendetes Datenpaket von dem Sender empfangen wurde.

Zur Bestimmung des Abstands zwischen dem Sender und dem Empfänger existieren folgende drei Möglichkeiten:

- In einem von dem Empfänger vorher im Sender empfangenen Datenpaket ist der Ort des Empfängers enthalten. Durch die Kenntnis des Orts des Empfängers kann der Abstand zwischen dem Sender und dem Empfänger bestimmt werden.
- Beispielsweise mittels einer Karte werden wichtige Orte (z. B. eine Kreuzung) bestimmt. Als der Abstand zwischen dem Sender und dem Empfänger wird jeweils der Abstand zwischen dem Sender und einem der wichtigen Orte bestimmt.
- Abhängig von einer durch das jeweilige Datenpaket zu übermittelnden Information (z.B. eine Warnung vor einer Baustelle) wird ein Mindestabstand bestimmt, bis zu welchem das Datenpaket mit einer vorbestimmten Wahrscheinlichkeit (z.B. 99%) empfangen werden soll.

Dieser Mindestabstand wird dann als der Abstand zwischen dem Sender und dem Empfänger eingesetzt.

Die Signalqualität z.B. in dBm kann nun unter der Voraussetzung einer logarithmischen Normalverteilung z.B. gemäß der folgenden Gleichung (1) bestimmt werden:

$$SQ = AG + TP - v * \log_{10}(d) - w + e_E + e_V \qquad (1),$$

Dabei entspricht AG dem Antennengewinn z.B. in dBm der mindestens einen Antenne des Fahrzeugs bzw. Verkehrsinfrastrukturobjekts, TP der Sendeleistung z.B. in dBm der Sendeantenne des Fahrzeugs bzw. Verkehrsinfrastrukturobjekts, d dem Abstand z.B. in Meter zwischen dem Sender und dem Empfänger, v dem Koeffizienten, mit welchem die von dem Abstand zwischen dem Sender und dem Empfänger abhängigen Effekte, welche die Signalqualität verändern, berücksichtigt werden, w der Dämpfung z.B. in dBm der Signalleistung des Datenpakets aufgrund von Umgebungsfaktoren, $e_E$ dem mittleren Übertragungsfehler z.B. in dBm und $e_v$ dem individuellen Übertragungsfehler z.B. in dBm.

Die Sendeleistung TP und der Abstand d können dabei von der Zeit abhängen, so dass in diesem Fall auch die berechnete Signalqualität SQ von der Zeit abhängt, so dass die Signalqualität quasi in Echtzeit geschätzt werden kann.

Beispielsweise liegen in den städtischen Bereichen von Frankfurt die Werte für den Koeffizienten v bei 22,33 und für die Dämpfung w bei 52,95 dBm, während diese Werte für Waldgebiete in Frankfurt für den Koeffizienten v bei 15,96 und für die Dämpfung w bei 65,59 dBm liegen.

Da der Antennengewinn und die Sendeleistung beim Empfänger nicht bekannt sind, werden stattdessen der Antennengewinn und die Sendeleistung der mindestens einen Antenne des Fahrzeugs bzw. Verkehrsinfrastrukturobjekts zur Schätzung der Signalqualität verwendet.

Bezüglich des Einsatzes der oben beschriebenen Gleichung (1) existiert zum einen die Möglichkeit, dass der mittlere Übertragungsfehler und der individuelle Übertragungsfehler bekannt sind, indem sie beispielsweise anhand einer gemessenen Signalqualität von Datenpaketen, welche in dem Fahrzeug bzw. Verkehrsinfrastrukturobjekt selbst empfangen wurden, bestimmt werden. Zum anderen existiert die Möglichkeit, dass der mittlere Übertragungsfehler und der individuelle Übertragungsfehler nicht bekannt sind, so dass die Signalqualität SQ ohne diese beiden Übertragungsfehler bestimmt wird, wie es in der folgenden Gleichung (1a) angegeben ist:

$$SQ = AG + TP - v * \log_{10}(d) - w \qquad\qquad (1a),$$

Für den Fall, dass das Datenpaket von dem Sender (insbesondere von dem Fahrzeug) über eine Zwischenstelle bzw. Zwischeneinrichtung zu dem Empfänger gesendet wird, kann der Abstand d durch das Produkt des Abstands a1 zwischen dem Sender und der Zwischenstelle und dem Abstand a2 von der Zwischenstelle zu dem Empfänger bestimmt werden, so dass d = a1 * a2 gilt.

Wie bereits vorab angedeutet wurde, kann der mittlere Übertragungsfehler und/oder der individuelle Übertragungsfehler anhand von Datenpaketen bestimmt werden, welche im Fahrzeug bzw. Verkehrsinfrastrukturobjekt selbst empfangen werden und z.B. von anderen Fahrzeugen oder Infrastruktureinrichtungen stammen. Dazu wird eine Empfangsleistung gemessen oder bestimmt, welche aktuell bei der Empfangsantenne des Fahrzeugs bzw. Verkehrsinfrastrukturobjekts beim Empfang von Datenpaketen vorliegt. Anschließend kann der mittlere Übertragungsfehler und/oder der individuelle Übertragungsfehler auf der Basis eines Vergleichs zwischen der Signalqualität, welche wie vorab beschrieben bestimmt wird, und der bestimmten Empfangsleistung bestimmt oder adaptiert werden.

Gemäß einer bevorzugten Ausführungsform wird die aktuelle Position des Senders bestimmt. Anschließend wird/werden für den Koeffizienten v und/oder für die Dämpfung w und/oder für den mittleren Übertragungsfehler $e_E$ und/oder für den individuellen Übertragungsfehler $e_v$ in Abhängigkeit von der Position bekannte Werte verwendet. Diese Werte können beispielsweise vorher von dem Fahrzeug selbst, von einem anderen Fahrzeug oder anderweitig bestimmt worden sein. Diese Werte können im Sender selbst gespeichert sein oder sich in einem außerhalb des Senders befindlichen Speicher befinden. Im zweiten Fall werden diese Werte von dem Sender über eine (meist drahtlose) Kommunikation angefordert und dann zur Schätzung einer möglichst exakten Signalqualität verwendet.

Diese Ausführungsform ermöglicht, die Signalqualität auch dann anhand der Gleichung (1) oder Gleichung (1a) zu bestimmen, auch wenn das Fahrzeug bzw. Verkehrsinfrastrukturobjekt noch kein Datenpaket empfangen hat.

Zum Schätzen der Signalqualität kann beispielsweise wie folgt vorgegangen werden:

- Ein Ort, an welchem die Signalqualität bestimmt werden soll, wird ermittelt.
- Der Abstand d zwischen dem Fahrzeug bzw. Verkehrsinfrastrukturobjekt und dem Ort wird ermittelt.
- Die Signalqualität wird anhand der Gleichung (1) ermittelt, sofern das Fahrzeug bzw. Verkehrsinfrastrukturobjekt bereits Datenpakete in der aktuellen Umgebung und von dem entsprechenden Empfänger empfangen hat, mit deren Hilfe der mittlere Übertragungsfehler und der individuelle Übertragungsfehler bestimmt werden können. Oder die Signalqualität wird anhand der Gleichung (1a) ermittelt, wenn der mittlere Übertragungsfehler und der individuelle Übertragungsfehler nicht bestimmt werden können und nicht bekannt sind.

Durch das vorab skizzierte Vorgehen kann quasi die Signalqualität für die Übertragung von Datenpaketen vom Fahrzeug bzw. Verkehrsinfrastrukturobjekt zu einem Empfänger an einem beliebigen Ort geschätzt werden.

Ausgehend von der Signalqualität SQ kann auch die Empfangswahrscheinlichkeit Pr anhand eines Logit-Models, beispielsweise anhand der folgenden Gleichung (2), ermittelt werden.

Dabei wird unter einem Logit-Model bzw. einer logistischen Regression eine Regressionsanalyse zur Modellierung der Verteilung diskreter abhängiger Variablen verstanden.

$$P_r = \frac{1}{1 + e^{a + b \cdot SQ + c \cdot CL}} \qquad (2),$$

Dabei entspricht CL einer prozentualen Kanallast des Fahrzeugs bzw. Verkehrsinfrastrukturobjekts, und bei den Variablen a, b, c handelt es sich um Konstanten, welche abhängig von der aktuellen Umgebung des Fahrzeugs sind. Beispielsweise für Frankfurt gilt a = -18,4879, b = -0,20341 und c = 5,94928.

Die prozentuale Kanallast kann durch ein Verhältnis der als "BUSY" (besetzt) identifizierten Slots bzw. Zeitschlitze zu allen in einem vorbestimmten Zeitintervall (z.B. den letzten 100 ms) vorhandenen Slots bestimmt werden. Dabei wird ein Slot als "BUSY" identifiziert, wenn er bereits eine Information z.B. von einem anderen Datenpaket (z.B. von einem anderen Fahrzeug oder einem anderen Verkehrsinfrastrukturobjekt) enthält, so dass dieser Slot nicht zum Senden des Datenpakets zu dem Empfänger eingesetzt werden kann.

Im Rahmen der vorliegenden Erfindung wird auch ein Verfahren zur Bestimmung einer Übertragungsrate bereitgestellt, wobei die Übertragungsrate eine Rate angibt, mit welcher Datenpakete von einem Sender, welcher ein Fahrzeug oder ein Verkehrsinfrastrukturobjekt (z.B. eine so genannte Road Site Unit) ist, drahtlos zu einem Empfänger gesendet werden. Dabei umfasst das erfindungsgemäße Verfahren zur Bestimmung der Übertragungsrate folgende Schritte:

- Schätzen einer Empfangswahrscheinlichkeit, welches drahtlos von dem Fahrzeug bzw.Verkehrsinfrastrukturobjekt gesendet und bei einem Empfänger empfangen wird.
- Bestimmen der Übertragungsrate in Abhängigkeit von einer vorgegebenen Soll-Empfangswahrscheinlichkeit und der vorab bestimmten Empfangswahrscheinlichkeit.

Mit Hilfe des erfindungsgemäßen Verfahrens zur Bestimmung der Übertragungsrate kann die Übertragungsrate vorteilhafterweise derart eingestellt werden, dass die Empfangswahrscheinlichkeit, mit welcher Datenpakete am Empfänger korrekt empfangen werden, der vorgegebenen Soll-Empfangswahrscheinlichkeit entspricht.

Dabei wird die Übertragungsrate f in der Einheit Hz mit folgender Gleichung (3) bestimmt:

$$f = \frac{\log(1 - P_Y)}{\log(1 - P_r)} \qquad (3),$$

Dabei entspricht $P_y$ der Soll-Empfangswahrscheinlichkeit und $P_r$ der vorab bestimmten Empfangswahrscheinlichkeit.

Die vorab bestimmte Empfangswahrscheinlichkeit wird insbesondere anhand des vorab beschriebenen Verfahrens zum Schätzen der Empfangswahrscheinlichkeit ermittelt.

Im Rahmen der vorliegenden Erfindung wird auch eine Vorrichtung für ein Fahrzeug oder ein Verkehrsinfrastrukturobjekt (z.B. eine so genannte Road Site Unit) bereitgestellt, welche mindestens eine Antenne und Steuermittel umfasst. Die Vorrichtung ist ausgestaltet, um mit Hilfe der Steuermittel eine Signalqualität eines empfangenen Datenpakets zu schätzen oder zu bestimmen, welches drahtlos mit der mindestens einen Antenne von der Vorrichtung zu einem Empfänger übertragen wird. Die Steuermittel sind ausgestaltet, um eine Empfangswahrscheinlichkeit des empfangenen Datenpakets abhängig von der geschätzten Signalqualität zu schätzen bzw. zu bestimmen.

Die Vorteile der Vorrichtung entsprechen im Wesentlichen den Vorteilen des Verfahrens zum Schätzen der Empfangswahrscheinlichkeit des Datenpakets, welche vorab im Detail ausgeführt sind, so dass hier auf eine Wiederholung verzichtet wird.

Insbesondere ist die Vorrichtung zur Durchführung des erfindungsgemäßen Verfahrens zum Schätzen der Empfangswahrscheinlichkeit eines Datenpakets ausgestaltet. Im Rahmen der vorliegenden Erfindung wird auch eine weitere Vorrichtung für ein Fahrzeug oder ein Verkehrsinfrastrukturobjekt (z.B. eine so genannte Road Site Unit) bereitgestellt, welche mindestens eine Antenne und Steuermittel umfasst. Die weitere Vorrichtung ist ausgestaltet, um mit Hilfe der Steuermittel eine Empfangswahrscheinlichkeit eines Datenpakets zu schätzen, welches drahtlos von der weiteren Vorrichtung zu einem Empfänger übertragen wird. Die Steuermittel sind ausgestaltet, um eine Übertragungsrate, mit welcher Datenpakete von der weiteren Vorrichtung drahtlos zu dem Empfänger übertragen werden, abhängig von einer vorgegebenen Soll-Empfangswahrscheinlichkeit und der vorab bestimmten Empfangswahrscheinlichkeit zu bestimmen.

Die Vorteile der erfindungsgemäßen weiteren Vorrichtung entsprechen im Wesentlichen den Vorteilen des erfindungsgemäßen Verfahrens zur Bestimmung einer Übertragungsrate, welche vorab im Detail ausgeführt sind, so dass hier auf eine Wiederholung verzichtet wird. Insbesondere ist die erfindungsgemäße weitere Vorrichtung zur Durchführung des erfindungsgemäßen Verfahrens zur Bestimmung einer Übertragungsrate ausgestaltet. Schließlich wird im Rahmen der vorliegenden Erfindung ein Fahrzeug oder ein Verkehrsinfrastrukturobjekt (z.B. eine so genannte Road Site Unit) bereitgestellt, welches eine Vorrichtung und/oder eine weitere Vorrichtung umfasst.

Die vorliegende Erfindung ermöglicht die Bestimmung oder Berechnung einer optimalen Übertragungsrate für Datenpakete, ohne dass dazu eine Rückmeldung von Empfängern der Datenpakete notwendig ist. Dadurch kann die Übertragungsrate zum Senden der Datenpakete an verschiedene Fahrzeuge oder Verkehrsinfrastrukturobjekte so eingestellt werden, dass die Empfangswahrscheinlichkeit der Datenpakete beim Empfänger einer entsprechenden Vorgabe entspricht, ohne dass unnötigerweise zu viele Datenpakete gesendet werden, so dass kein Datenstau entsteht.

Die vorliegende Erfindung ist insbesondere für Kraftfahrzeuge, aber auch für Verkehrsinfrastrukturobjekte (z. B. Road Site Units) geeignet, welche Informationen in Form von Datenpaketen an (andere) Fahrzeuge oder Verkehrsinfrastrukturobjekte übertragen. Selbstverständlich ist die vorliegende Erfindung nicht auf diesen bevorzugten Anwendungsbereich eingeschränkt, da die vorliegende Erfindung auch bei Schiffen oder Flugzeugen sowie spurgeführten oder gleisgebundenen Fahrzeugen eingesetzt werden kann. Darüber hinaus kann die vorliegende Erfindung auch bei Mobilgeräten (z.B. Smartphones) eingesetzt werden.

In Folgenden wird die vorliegende Erfindung anhand bevorzugter erfindungsgemäßer Ausführungsformen mit Bezug zu den Figuren im Detail beschrieben.

In Fig. 1 ist schematisch ein erfindungsgemäßes Fahrzeug mit einer erfindungsgemäßen Vorrichtung dargestellt.

In Fig. 2 ist ein Flussplan eines erfindungsgemäßen Verfahrens zur Bestimmung einer Übertragungsrate dargestellt.

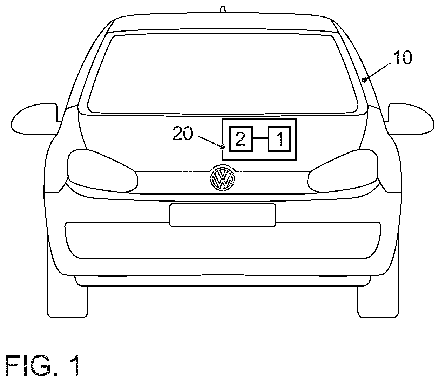

In Fig. 1 ist schematisch ein erfindungsgemäßes Fahrzeug 10 dargestellt, welches eine erfindungsgemäße Vorrichtung 20 umfasst. Diese Vorrichtung 20 umfasst ihrerseits eine Antenne 1 und Steuermittel 2. Bei der Antenne 1 handelt es sich um eine Antenne, mit welcher Datenpakete von der Vorrichtung 20 bzw. von dem Fahrzeug 10 gesendet und auch empfangen werden können. Mit Hilfe der Steuermittel 2 schätzt die Vorrichtung 20 die Signalqualität eines Datenpakets, welches drahtlos über die Antenne 1 versendet und von einem Empfänger (nicht dargestellt) empfangen wird. Anhand der Signalqualität bestimmen die Steuermittel 2 dann eine Empfangswahrscheinlichkeit, mit welcher das Datenpaket von dem Empfänger korrekt empfangen wird. Abhängig von der bestimmten Empfangswahrscheinlichkeit und einer vorgegebenen Soll-Empfangswahrscheinlichkeit können die Steuermittel dann eine Übertragungsrate bestimmen, mit welcher die Vorrichtung 20 Datenpakete an den Empfänger überträgt, damit die Empfangswahrscheinlichkeit dieser Datenpakete beim Empfänger der vorgegebenen Soll-Empfangswahrscheinlichkeit entspricht.

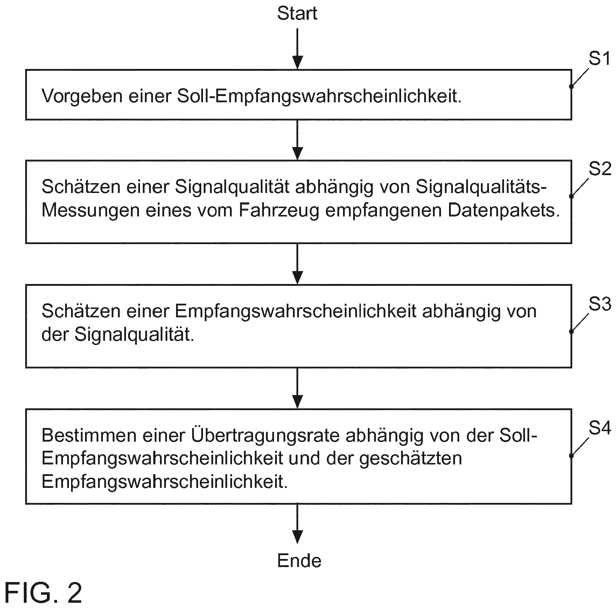

Fig. 2 zeigt einen Flussplan eines erfindungsgemäßen Verfahrens zur Bestimmung der Übertragungsrate, mit welcher Datenpakete von einem Fahrzeug zu einem Empfänger zu senden sind, damit eine vorgegebene Soll-Empfangswahrscheinlichkeit beim Empfänger eingehalten wird.

Im Schritt S1 wird die Soll-Empfangswahrscheinlichkeit vorgegeben. Im Schritt S2 wird die Signalqualität von Datenpaketen gemessen, welche von dem Fahrzeug 10 empfangen werden. Anhand dieser gemessenen Signalqualität wird die Signalqualität geschätzt, mit welcher die von dem Fahrzeug 10 gesendeten Datenpakete von dem Empfänger empfangen werden. Im Schritt S3 wird die Empfangswahrscheinlichkeit, mit welcher ein von dem Fahrzeug 10 gesendetes Datenpaket von dem Empfänger korrekt empfangen wird, abhängig von der im Schritt S2 geschätzten Signalqualität geschätzt. Schließlich wird im Schritt S4 ausgehend von der vorgegebenen Soll-Empfangswahrscheinlichkeit und der im Schritt S3 geschätzten Empfangswahrscheinlichkeit die Übertragungsrate bestimmt. Wenn die Datenpakete mit dieser bestimmten Übertragungsrate vom Fahrzeug 10 bzw. von der Vorrichtung 20 an den Empfänger übertragen werden, sollte die Empfangswahrscheinlichkeit der Datenpakete beim Empfänger der Soll-Empfangswahrscheinlichkeit entsprechen.

Gerade bei sicherheitsrelevanten Funktionen, beispielsweise für den Notbremsassistent, ist eine fehlerfreie Übertragung von Datenpaketen zwischen Fahrzeugen von entscheidender Bedeutung. Wenn Datenpakete, mit welchen beim empfangenen Fahrzeug eine Notbremsung eingeleitet werden soll, um einen Zusammenstoß zu verhindern, nicht rechtzeitig oder nicht korrekt empfangen werden, weist die Car2Car-Kommunikation keinen Vorteil auf. Die vorliegende Erfindung erhöht die Wahrscheinlichkeit der fehlerfreien und rechtzeitigen Übertragung der Datenpakete zwischen Fahrzeugen beträchtlich, was gerade für sicherheitsrelevante Funktionen von großer Bedeutung ist.

**Bezugszeichenliste**

| | |
|---|---|
| 1 | Antenne |
| 2 | Steuermittel |
| 10 | Fahrzeug |
| 20 | Vorrichtung |
| S1-S4 | Verfahrensschritt |

**Patentansprüche**

1. Verfahren zur Bestimmung einer Übertragungsrate, mit welcher Datenpakete von einem Sender (10) drahtlos zu einem Empfänger gesendet werden,

   wobei der Sender ein Verkehrsinfrastrukturobjekt oder ein Fahrzeug (10) ist,
   wobei das Verfahren folgende Schritte umfasst:

   Schätzen einer Signalqualität eines Datenpakets, welches drahtlos von dem Sender (10) zu einem Empfänger gesendet wird,
   Schätzen der Empfangswahrscheinlichkeit des Datenpakets auf Basis der geschätzten Signalqualität; und
   Bestimmen der Übertragungsrate abhängig von einer vorgegebenen Soll-Empfangswahrscheinlichkeit und der bestimmten Empfangswahrscheinlichkeit,
   wobei die Übertragungsrate f mit folgender Gleichung bestimmt wird:

   $$f = \frac{\log(1 - P_Y)}{\log(1 - P_r)} \qquad (3),$$

   wobei f der Übertragungsrate pro Sekunde entspricht,
   wobei $P_y$ der Soll-Empfangswahrscheinlichkeit entspricht, und
   wobei $P_r$ der geschätzten Empfangswahrscheinlichkeit entspricht.

2. Verfahren nach Anspruch 1,
   **dadurch gekennzeichnet,**
   **dass** das Verfahren folgende Schritte umfasst:

   Empfangen eines Datenpakets durch den Sender (10), und
   Anpassen des Schätzens der Signalqualität auf Basis des empfangenen Datenpakets.

3. Verfahren nach Anspruch 1 oder 2,
   **dadurch gekennzeichnet,**
   **dass** die Signalqualität zumindest abhängig von einem Parameter bestimmt wird, welcher ausgewählt ist aus einer Gruppe, welche umfasst:

   • einem mittleren Übertragungsfehler, welcher abhängig von der aktuellen Umgebung des Senders (10) ist, und
   • einem individuellen Übertragungsfehler, welcher abhängig von der Übertragung zwischen dem Sender (10) und dem Empfänger ist.

4. Vorrichtung für ein Verkehrsinfrastrukturobjekt oder ein Fahrzeug (10),

   wobei die Vorrichtung (20) mindestens eine Antenne (1) und Steuermittel (2) umfasst,
   wobei die Vorrichtung (20) ausgestaltet ist, um mittels der Steuermittel (2) eine Signalqualität eines Datenpakets, welches drahtlos mittels der mindestens einen Antenne (1) von der Vorrichtung (20) zu einem Empfänger gesendet wird, zu schätzen und auf Basis der geschätzten Signalqualität eine Empfangswahrscheinlichkeit des Datenpakets zu schätzen und um eine Übertragungsrate abhängig von einer vorgegebenen Soll-Empfangswahrscheinlichkeit und der geschätzten Empfangswahrscheinlichkeit zu bestimmen, wobei die Vorrichtung (20) ausgestaltet ist, um die Übertragungsrate f mit folgender Gleichung zu bestimmen:

   $$f = \frac{\log(1 - P_Y)}{\log(1 - P_r)} \qquad (3),$$

   wobei f der Übertragungsrate pro Sekunde entspricht,
   wobei $P_y$ der Soll-Empfangswahrscheinlichkeit entspricht, und
   wobei $P_r$ der geschätzten Empfangswahrscheinlichkeit entspricht.

5. Vorrichtung nach Anspruch 4,

**dadurch gekennzeichnet,**
**dass** die Vorrichtung (20) zur Durchführung des Verfahrens nach einem der Ansprüche 1-3 ausgestaltet ist.

**Claims**

1. Method for determining a transmission rate at which data packets are sent wirelessly from a transmitter (10) to a receiver,

   wherein the transmitter is a traffic infrastructure object or a vehicle (10),
   wherein the method comprises the following steps:

   estimating a signal quality of a data packet which is transmitted wirelessly from the transmitter (10) to a receiver,
   estimating the probability of receiving the data packet on the basis of the estimated signal quality; and
   determining the transmission rate depending on a predetermined target reception probability and the determined reception probability, wherein the transmission rate f is determined with the following equation:

$$f = \frac{\log(1 - P_Y)}{\log(1 - P_r)} \qquad (3),$$

   wherein f corresponds to the transmission rate per second,
   wherein $P_y$ corresponds to the target reception probability, and
   wherein $P_r$ corresponds to the estimated reception probability.

2. Method according to Claim 1,
   **characterized in that**
   the method comprises the following steps:

   reception of a data packet by the transmitter (10), and
   adaptation of the estimation of the signal quality on the basis of the received data packet.

3. Method according to Claims 1 or 2,
   **characterized in that**
   the signal quality is determined at least depending on a parameter which is selected from a group comprising:

   • a mean transmission error which is dependent on the current environment of the transmitter (10), and
   • an individual transmission error which is dependent on the transmission between the transmitter (10) and the receiver.

4. Device for a traffic infrastructure object or a vehicle (10),

   wherein the device (20) comprises at least one antenna (1) and control means (2); wherein the device (20) is designed to estimate, by means of the control means (2), a signal quality of a data packet which is wirelessly sent from the device (20) to a receiver by means of the at least one antenna (1), and, on the basis of the estimated signal quality, to estimate a reception probability of the data packet and to determine a transmission rate depending on a predetermined target reception probability and the estimated reception probability; wherein the device (20) is designed to determine the transmission rate f with the following equation:

$$f = \frac{\log(1 - P_Y)}{\log(1 - P_r)} \qquad (3),$$

   wherein f corresponds to the transmission rate per second,
   wherein $P_y$ corresponds to the target reception probability, and

wherein $P_r$ corresponds to the estimated reception probability.

**5.** Device according to Claim 4,
**characterized in that**
the device (20) is designed to implement the method according to any one of Claims 1 - 3.

**Revendications**

**1.** Procédé de détermination d'un débit de transmission, avec lequel des paquets de données sont envoyés sans fil d'un émetteur (10) à un récepteur,

l'émetteur étant un objet d'infrastructure routière ou un véhicule (10),
le procédé comprenant les étapes suivantes :

estimation d'une qualité de signal d'un paquet de données, lequel est envoyé sans fil d'un émetteur (10) à un récepteur,
estimation de la probabilité de réception du paquet de données sur la base de la qualité de signal estimée ; et
détermination du débit de transmission en fonction d'une probabilité de réception de consigne prédéterminée et de la probabilité de réception déterminée, le débit de transmission f étant déterminé au moyen de l'équation suivante :

$$f = \frac{\log(1 - P_Y)}{\log(1 - P_r)} \qquad (3),$$

f correspondant au débit de transmission par seconde,
$P_y$ correspondant à la probabilité de réception de consigne, et
$P_r$ correspondant à la probabilité de réception estimée.

**2.** Procédé selon la revendication 1,
**caractérisé en ce**
**que** le procédé comprend les étapes suivantes :

réception d'un paquet de données par l'émetteur (10), et
ajustement de l'estimation de la qualité de signal sur la base du paquet de données reçu.

**3.** Procédé selon la revendication 1 ou 2,
**caractérisé en ce**
**que** la qualité de signal est déterminée au moins en fonction d'un paramètre, lequel est choisi dans le groupe qui comprend :

• une erreur de transmission moyenne, laquelle dépend de l'environnement actuel de l'émetteur (10), et
• une erreur de transmission individuelle, laquelle dépend de la transmission entre l'émetteur (10) et le récepteur.

**4.** Dispositif pour un objet d'infrastructure routière ou un véhicule (10),

le dispositif (20) comprenant au moins une antenne (1) et un moyen de commande (2), le dispositif (20) étant conçu pour estimer au moyen du moyen de commande (2) une qualité de signal d'un paquet de données, lequel est envoyé sans fil à un récepteur au moyen de l'au moins une antenne (1) du dispositif (20), et pour estimer, sur la base de la qualité de signal estimée, une probabilité de réception du paquet de données et pour déterminer un débit de transmission en fonction d'une probabilité de réception de consigne prédéterminée et de la probabilité de réception estimée, le dispositif (20) étant conçu pour déterminer le débit de transmission f au moyen de l'équation suivante :

$$f = \frac{\log(1 - P_Y)}{\log(1 - P_r)} \qquad (3),$$

f correspondant au débit de transmission par seconde,
$P_y$ correspondant à la probabilité de réception de consigne, et
$P_r$ correspondant à la probabilité de réception estimée.

5. Dispositif selon la revendication 4,
   **caractérisé en ce**
   **que** le dispositif (20) est conçu pour exécuter le procédé selon l'une quelconque des revendications 1 à 3.

FIG. 1

Start

Vorgeben einer Soll-Empfangswahrscheinlichkeit. — S1

Schätzen einer Signalqualität abhängig von Signalqualitäts-Messungen eines vom Fahrzeug empfangenen Datenpakets. — S2

Schätzen einer Empfangswahrscheinlichkeit abhängig von der Signalqualität. — S3

Bestimmen einer Übertragungsrate abhängig von der Soll-Empfangswahrscheinlichkeit und der geschätzten Empfangswahrscheinlichkeit. — S4

Ende

FIG. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102010056158 A1
- EP 1069721 A2